# EUROPÄISCHE PATENTSCHRIFT

(11) **EP 3 348 128 B1**
(45) Veröffentlichungstag und Bekanntmachung des Hinweises auf die Patenterteilung: **25.09.2019**
(21) Anmeldenummer: 18401002.3
(22) Anmeldetag: 05.01.2018
(51) Int. Cl.: A01C 17/00, A01C 21/00

(54) **VERFAHREN ZUR ERMITTLUNG VON TEILBREITEN BEI EINEM LANDWIRTSCHAFTLICHEN SCHLEUDERSTREUER**
METHOD FOR DETERMINING PARTIAL WIDTHS FOR AN AGRICULTURAL DISTRIBUTOR
PROCÉDÉ DE DÉTERMINATION DE TRONÇONS POUR UN ÉPANDEUR AGRICOLE

(30) Priorität: 16.01.2017 DE 102017100668
(43) Veröffentlichungstag der Anmeldung: 18.07.2018
(73) Patentinhaber: Amazonen-Werke H. Dreyer GmbH & Co. KG, 49205 Hasbergen (DE)
(72) Erfinder: Rahe, Florian, 49504 Lotte (DE); Ströbel-Fröschle, Markus, 49124 Georgsmarienhütte (DE)

(56) Entgegenhaltungen:
- EP-A1- 2 198 683
- EP-A1- 2 798 929
- FR-A1- 3 005 235

## Beschreibung

Die Erfindung betrifft ein Verfahren zur Ermittlung von Teilbreitenpositionen gemäß dem Oberbegriff des Patentanspruches 1 und einen entsprechend angepassten Schleuderstreuer.

Ein derartiger Schleuderstreuer ist bekannt aus der EP 2 798 929 A1. In diesem Dokument wird die Parametrisierung des Streubereiches eines Schleuderstreuers in Abhängigkeit der Form des Verteilbereiches des Schleuderstreuers vorgenommen. Insbesondere wird der Verteilbereich des Schleuderstreuers in Teilbreiten aufgeteilt. Mittels hinterlegter Applikationskarten kann so die Verteilcharakteristik an die jeweils vorliegenden Anforderungen angepasst werden, so dass die Verteilung nur im Bereich jener Teilbreiten erfolgt, die sich in einem Bereich der Applikationskarte befinden in dem auch Streugut ausgebracht werden soll und zuvor noch kein Streugut in ausreichender Menge ausgebracht wurde.

Entsprechend im Speicher eines Steuergerätes und/oder Jobrechner hinterlegter Rechenvorschriften wird die Verteilcharakteristik durch Einstellung der Streuparameter der vorzugsweise zwei Schleuderscheiben, wie beispielsweise Aufgabepunkt des Streugutes auf die jeweilige Schleuderscheibe, Drehzahl der Schleuderscheibe, Position des Dosierschiebers zur Steuerung der Ausbringmenge der jeweiligen Schleuderscheibe und Position einer Schleuderschaufel und/oder einer Grenzstreueinrichtung, und in Abhängigkeit von Parametern wie verwendetes Streugut, insbesondere verwendete Düngersorte, und verwendete Streuscheiben in der Weise angepasst, dass nur in den Teilbreiten Streugut ausgebracht wird, welche sich in einem Bereich des Feldes befinden, in dem Streugut ausgebracht werden soll.

Nachteilig am bekannten Stand der Technik ist, dass die Wahl der Teilbreiten allein in Abhängigkeit der Verteilcharakteristik dazu führen kann, dass bei der Bearbeitung von Feldbereichen vermeintlich unbearbeitete Flächen übrigbleiben, obwohl diese zuvor mit dem Schleuderstreuer überfahren und bearbeitet wurden. Aufgabe der vorliegenden Erfindung ist es die Nachteile des Standes der Technik zu beheben und ein Verfahren zur Bestimmung von optimierten Teilbreitenpositionen bereitzustellen.

Diese Aufgabe wird gelöst durch den kennzeichnenden Teil des Anspruchs 1. Entsprechend wird also die Form und/oder Ausdehnung jeder Teilbreite in Fahrtrichtung in der Weise in Abhängigkeit des Versatzes der Teilbreiten in Fahrtrichtung derart gewählt, dass sich zwei senkrecht zur Fahrtrichtung benachbarte Teilbreiten zumindest teilweise insbesondere in Fahrtrichtung überlappen. Auf diese Weise wird sichergestellt, dass die während der Fahrt über die zu bearbeitende Fläche mit dem Streufächer bearbeiteten Feldbereiche auch tatsächlich durch bearbeitende Teilbreiten überstrichen werden. Mit anderen Worten kann es bei nicht überlappenden Teilbreiten insbesondere während einer Kurvenfahrt geschehen, dass Feldbereiche durch nichtüberlappende Teilbreiten von keiner bearbeitenden Teilbreite berührt werden, obwohl dieser Feldbereich durch den Streufächer bearbeitet wurde. Dieser unerwünschte Effekt lässt sich auf effektive Weise dadurch verhindern, dass benachbarte Teilbreiten jeweils zwingend eine Überlappung aufweisen müssen. Dies ist insbesondere vorteilhaft wenn die Teilbreiten in Abhängigkeit der Streufächergeometrie angeordnet sind, wie in der EP 2 798 929 A1, da durch die Anordnung der Teilbreiten in Abhängigkeit der Streufächergeometrie ein Versatz benachbarter Teilbreiten in Fahrtrichtung erzeugt wird, welcher obigen Effekt begünstigen oder insbesondere auch ermöglichen kann.

In einer vorteilhaften Weiterbildung der Erfindung wird aus den verwendeten Streuparametern die Form des Streufächers ermittelt, insbesondere in Abhängigkeit von zumindest einer die tatsächliche Wurfweite und den Abwurfwinkel charakterisierenden Größe und die Position jeder Teilbreite in Abhängigkeit der Form des Streufächers ermittelt Es wird insbesondere in einem Jobrechner eines Schleppers oder Schleuderstreuers die tatsächliche Wurfweite und der Abwurfwinkel ermittelt bzw. eine oder mehrere Größen, welche direkt von diesen Parametern abhängig sind und in Abhängigkeit dieser Größen werden die Positionen der Teilbreiten ermittelt. Diese Vorgehensweise ist insbesondere deswegen von Vorteil, weil der Abwurfwinkel und die tatsächliche Wurfweite als die Streufächerform charakterisierende Größen besonders gut geeignet sind, um vorteilhafte Positionen der anzulegenden Teilbreiten zu ermitteln. Insbesondere kann vorgesehen sein die tatsächliche Wurfweite und/oder den Abwurfwinkel mittels an dem Schleuderstreuer angeordneter Messsysteme insbesondere Radarsysteme zu messen. Hierbei kann es sich insbesondere um zwei separate Messsysteme handeln, wobei eines der Messsysteme zum Ermitteln der Wurfweite und ein zweites Messsystem zur Ermittlung des Abwurfwinkels vorgesehen sind.

Die tatsächliche Wurfweite bezieht sich hierbei nicht auf die maximale Wurfweite senkrecht zur Fahrtrichtung, welche direkt mit der Arbeitsbreite korreliert ist, sondern die tatsächliche mittlere Entfernung zwischen der jeweiligen Streuscheibe bzw. dem Streuscheibenzentrum und dem Punkt an dem das Streugut auf die landwirtschaftliche Fläche auftrifft.

In einer vorteilhaften Weiterbildung der Erfindung wird die Ausdehnung jeder Teilbreite in Fahrtrichtung proportional zum Versatz in Fahrtrichtung zumindest einer zu dieser Teilbreite benachbarten Teilbreite gewählt. Auf diese Weise kann besonders einfach ermöglicht werden, dass eine Überlappung benachbarter Teilbreiten sichergestellt ist. Je größer der Versatz zweier benachbarter Teilbreiten in Fahrtrichtung ist, je größer ist entsprechend auch die Ausdehnung zumindest einer der Teilbreiten in Fahrtrichtung, wobei die Ausdehnung insbesondere in der Richtung gewählt wird, in der die betrachtete benachbarte Teilbreite versetzt ist. Vorteilhaft ist hierbei vorgesehen, dass die Ausdehnung aller Teilbreiten jeweils in Abhängigkeit des Versatzes des linken oder rechten Nachbarn gewählt wird. Die Form jeder Teilbreite ist hierbei insbesondere rechteckig. Es können aber auch andere Geometrien, wie dreieckige Geometrien oder L-förmige Geometrien vorgesehen sein. Bei dreieckigen Geometrien ist insbesondere vorgesehen, dass eine Seite des Dreiecks sich quer zur Fahrtrichtung erstrecht und eine Seite des Dreiecks sich parallel zur Fahrtrichtung erstreckt, insbesondere auf der Seite der Teilbreite welche hinsichtlich einer Überlappung betrachtet wird. Bei einer L-förmigen Teilbreite ist vorgesehen, dass ein Schenkel des L sich quer zur Fahrtrichtung erstreckt und der zweite Schenkel des L sich parallel zur Fahrtrichtung auf der Seite der Teilbreite erstreckt, welche bzgl. einer

Überlappung mit der jeweils benachbarten Teilbreite dieser Teilbreite betrachtet wird. Auch kann vorgesehen sein, dass rechteckige oder linienförmige Teilbreitengeometrien schräg angeordnet werden. So können, je nach Form des Streufächers, die Teilbreiten im äußeren Bereich eine zunehmende Komponente in Fahrtrichtung besitzen, so dass sich die Teilbreiten nicht mehr ausschließlich quer zur Fahrtrichtung erstrecken. Ist im Stand der Technik vorgesehen, dass Teilbreiten gleicher Breite zumindest überwiegend nebeneinander angeordnet sind und den Streubereich in seiner Breite abdecken, so kann zur Sicherstellung der Überlappung bei schräg angeordneten Teilbreiten vorgesehen sein, dass die Teilbreiten in ihrer Breite variieren, insbesondere im äußeren Bereich des Streufächers breiter sind als in der Mitte. Hierbei ist jedoch die Komponente quer zur Fahrtrichtung vorzugsweise für alle Teilbreiten identisch.

In einer vorteilhaften Weiterbildung der Erfindung wird unter Beibehaltung einer zumindest teilweisen Überlappung benachbarter Teilbreiten die Ausdehnung der Teilbreiten in Fahrtrichtung zur Ermittlung möglichst exakter Ein- und Ausschaltpunkte der Verteilung minimiert. Auf diese Weise können möglichst präzise Ein- und Ausschaltpunkt ermittelt werden. Eingeschaltet wird der Streufächer der jeweiligen Teilbreite typischerweise dann, wenn ein zu bearbeitender Flächenteil oder Flächenpunkt einer Bearbeitungskarte bzw. Applikationskarte in eine Teilbreite eintritt und ausgeschaltet dann, wenn ein zu bearbeitender Flächenteil oder Flächenpunkt aus der Teilbreite austritt und kein neuer zu bearbeitender Flächenteil oder Flächenpunkt in die Teilbreite eintritt. Um möglichst präzise Ein- und Ausschaltpunkte zu ermöglichen, sollte die Teilbreite sehr kurz sein, so dass Ein- und Ausschaltpunkte also der Beginn und das Ende einer Teilbreite in Fahrtrichtung möglichst identisch sind. Die Minimierung dieser Länge kann unter Berücksichtigung weiterer Parameter erfolgen, wie beispielsweise der Ausbringmenge in einer Teilbreite, der Fahrgeschwindigkeit und dem Abstand von diskreten Flächenpunkten einer Applikationskarte, welche jeweils die Bearbeitung der Umgebung dieses Punktes mit Streugut anzeigen. Wenn beispielsweise die Applikationskarte mit diskreten Punkten in einem Abstand von 1 m bedeckt ist, welche jeweils eine Bearbeitung des umgebenden Bereiches angeben und das Ein- und Ausschalten des Streufächers durch den Eintritt bzw. Austritt eines solchen Punktes, welcher die Bearbeitung eines Bereiches ggf. mit einer hinterlegten Ausbringmenge angibt, in die bzw. aus der Teilbreite ausgelöst wird, kann es vorteilhaft sein, dass die Teilbreite zumindest dem Abstand der Punkte entspricht, so dass eine kontinuierliche Bearbeitung sichergestellt ist. Wesentlich ist hierbei, dass trotz Minimierung der Länge der Teilbreiten in Fahrtrichtung eine Überlappung benachbarter Teilbreiten jeweils sichergestellt ist. Die Minimierung kann hierbei ggf. unter Berücksichtigung weiterer Bedingungen erfolgen.

Alternativ oder zusätzlich kann vorgesehen sein, dass die Form des Streufächers durch die Angabe eines Quantils, insbesondere des 95%-Quantils, und/oder die Angabe des Medians der Verteilung in Fahrtrichtung ermittelt wird, wobei die Angabe des Medians eine überwiegend quer zur Fahrtrichtung verlaufende Linie definiert, welche bei einer Bewegung der Verteilmaschine in Fahrtrichtung und gleichbleibender Ausbringparameter an der jeweiligen Position 50%-Ausbringmenge anzeigt. Der Median gibt hierbei in besonders einfacher Weise insbesondere unter der Annahme einer symmetrischen Verteilung des Streugutes bzgl. des Medians in Fahrtrichtung die Form des Streufächers an. Die Position 50%-Ausbringmenge meint hierbei den Ort des Streufächers in Fahrtrichtung, bei dem bei der Fahrt über das Feld an einem Ort 50% der Ausbringmenge bei der Überfahrt unter gleichbleibenden Bedingungen ausgebracht werden, wenn bei einer einmaligen kompletten Überfahrt über einen Ort insgesamt 100% Dünger ausgebracht werden. 0%-Ausbringmenge würden dann entsprechend in Fahrtrichtung ganz vorne am Streufächer anliegen und 100% in Fahrtrichtung hinten am Streufächer. Bei einem in Fahrtrichtung vollkommen symmetrischen Streufächer wären 50% Ausbringmenge entsprechend genau in der Mitte des Streufächers.

Vorzugsweise berührt oder schneidet jede Teilbreite an zumindest einer Position den Median. Auf diese Weise ist sichergestellt, dass die Teilbreiten sich im Bereich des Medians und damit im mittleren Bereich des Streufächers befinden, wobei in diesem Bereich des Streufächers sich befindliche Teilbreiten zu besonders guten Ergebnissen bzgl. einer homogenen Verteilung mit Streugut führen.

In einer vorteilhaften Weiterbildung der Erfindung erstreckt sich keine der ermittelten Teilbreiten in einen Bereich größer 65%-Ausbringmenge, vorzugsweise größer 55%-Ausbringmenge, und kleiner 35%-Ausbringmenge, vorzugsweise kleiner 45%-Ausbringmenge. Auf diese Weise wird zusätzlich sichergestellt, dass die Teilbreiten sich bevorzugt im in Fahrtrichtung mittleren Bereich des Streufächers befinden. Somit ist eine besonders gleichmäßige Ausbringung des Streugutes sichergestellt.

In einer möglichen Weiterbildung der Erfindung erstreckt sich keine der ermittelten Teilbreiten in einen Bereich, welcher durch zumindest einen vorgegebenen Prozentwert und/oder Prozentbereich definiert ist, so dass der vorgegebene Prozentwert und/oder Prozentbereich nicht überschritten und/oder unterschritten wird, wobei der vorgegebene Prozentwert und/oder Prozentbereich durch gesetzliche Vorgaben hinsichtlich erlaubter Abweichungen, insbesondere Überdüngung definiert ist. Auf diese Weise wird sichergestellt, dass gesetzliche Vorgaben bzgl. möglicher schädlicher Überdüngungen von angrenzenden Flächen verhindert wird. Es kann hierbei vorgesehen sein, dass der Prozentwert und/oder Prozentbereich zur Sicherstellung der Einhaltung gesetzlicher Vorgaben zusätzliche Pufferbereiche oder Offsets berücksichtigt.

In einer möglichen Ausgestaltung der Erfindung wird die Verteilung, insbesondere die Drehzahl zumindest einer Schleuderscheibe und/oder der Aufgabepunkt des Streugutes auf zumindest eine Schleuderscheibe und/oder die Position zumindest eines Dosierschiebers anhand vorhandener Kartendaten und/oder Applikationsdaten und der Position der Teilbreiten gesteuert. Es ist also vorgesehen in Abhängigkeit der Position der jeweiligen Teilbreite und vorgegebener Kartendaten bzw. Applikationsdaten die Einstellparameter des Schleuderstreuers, insbesondere Drehzahl der Schleuderscheibe und/oder Aufgabepunkt des Streugutes auf die Schleuderscheibe derart anzupassen, dass nur in den vorgegebenen Bereichen bzw. den vorgesehenen Teilbreiten Streugut ausgebracht wird. Idealerweise wird die Form des Streufächers also laufend derart angepasst, dass jeweils nur in den Bereichen des Streufächers Streugut ausgebracht wird, deren Teilbreiten sich in einem Bereich des Feldes bzw. der Applikationskarte befinden, der mit Streugut beaufschlagt werden soll.

In einer vorteilhaften Weiterbildung der Erfindung wird die während der Bearbeitung durch eine jeweilige Teilbreite überstrichene Fläche als bearbeitete Fläche, insbesondere anhand hinterlegter Kartendaten der bearbeiteten Fläche, gespeichert. Es ist also vorgesehen, dass diejenigen Flächenbereiche markiert und als bearbeitet gespeichert werden, die durch aktivierte Teilbreiten überstrichen wurden. Aktivierte Teilbreiten sind hierbei diejenigen Teilbreiten, in welche zum jeweiligen Zeitpunkt Streugut ausgebracht wurde. Ein solches Speichern von bearbeiteten Flächenbereichen im Zusammenhang mit dem Überlappen von benachbarten Teilbreiten ermöglicht in besonders vorteilhafter Weise die Aufzeichnung von bearbeiteten Flächenbereichen, da durch die Überlappung benachbarter Teilbreiten sichergestellt ist, dass keine bereits bearbeiteten Flächenbereiche als unbearbeitete Bereiche gespeichert werden. Insbesondere kann hierdurch im weiteren Verlauf der Bearbeitung sichergestellt werden, dass keine bereits bearbeiteten und irrtümlicherweise als unbearbeitete Bereiche gespeicherten Flächenteile mit zu viel Streugut beaufschlagt werden. Dies kann zu Umweltschäden sowie einem unnötigen Verbrauch von Streugut und sonstigen Ressourcen, wie Kraftstoff und Zeit führen. Hierbei ist zu beachten, dass eine zweifache Bearbeitung eines Flächenteils aufgrund der bei der Bearbeitung mit einem Schleuderstreuer typischerweise vorgesehenen teilweisen Überlappung der Bearbeitungsbereiche benachbarter Fahrspuren grundsätzlich keine Fehlbearbeitung impliziert. Ein Flächenbereich wird mit anderen Worten bei der Bearbeitung also typischerweise zweimal mit Streugut beaufschlagt, bevor die gewünschte Menge an Streugut auf diesem Flächenbereich aufgebracht ist.

Die Erfindung betrifft zudem einen zur Durchführung des Verfahrens nach zumindest einem der Ansprüche 1 bis 10 angepassten Schleuderstreuer, wobei der Schleuderstreuer über zumindest eine, vorzugsweise zwei Schleuderscheiben, einen Dosierschieber pro Schleuderscheibe zur Einstellung der Ausbringmenge, einen regelbaren Antrieb pro Schleuderscheibe zur Einstellung der Drehzahl, vorzugsweise eine Einrichtung zur Anpassung des Aufgabepunktes pro Schleuderscheibe, ein Positionserfassungssystem und zumindest einen Jobrechner und/oder Terminal verfügt, wobei die Position jeder Teilbreite relativ zum Schleuderstreuer durch das Terminal und/oder den Jobrechner ermittelt wird, wobei der Jobrechner und/oder das Terminal die Verteilung des Schleuderstreuers in Abhängigkeit der Position jeder Teilbreite und in dem Jobrechner und/oder Terminal hinterlegter Kartendaten und/oder Applikationskarten steuert. Es ist also ein Jobrechner und/oder Terminal an dem Schleuderstreuer oder alternativ bzw. zusätzlich einem Schlepper vorhanden, welches die jeweilige Position des Schleuderstreuers bzw. der Teilbreiten ermitteln kann.

Der Jobrechner bzw. das Terminal ist ebenfalls ausgebildet in erfindungsgemäßer Weise die Teilbreitenpositionen in der Weise zu ermitteln, dass benachbarte Teilbreiten sich jeweils zumindest teilweise überlappen. Die Teilbreitenpositionen werden vorzugsweise in Abhängigkeit der Streufächergeometrie ermittelt, welche durch den Jobrechner und/oder das Terminal in Abhängigkeit von Einstellparametern, wie Drehzahl der jeweiligen Schleuderscheibe und/oder Aufgabepunkt der Streugutes auf die jeweilige Schleuderscheibe und/oder Art der Schleuderscheibe und/oder des Streugutes ermittelt werden kann. Ggf. können auch Messwerte zur Ermittlung des Abwurfwinkels und/oder der tatsächlichen Wurfweite hierfür verwendet oder zusätzlich berücksichtigt werden. Es kann zudem vorgesehen sein, dass durch das Terminal oder den Jobrechner in einer hinterlegten Karte die jeweils durch bearbeitende, also aktivierte Teilbreiten überstrichenen Flächenbereiche als bearbeitet markiert werden, so dass im weiteren Verlauf die Bearbeitung der landwirtschaftlichen Fläche anhand der bereits bearbeiteten Flächenbereiche gesteuert werden kann. Auf diese Weise werden Fehlbearbeitungen verhindert und die Bearbeitung der landwirtschaftlichen Fläche besonders effizient gesteuert. Hierbei ist bei einem Zweischeibenstreuer insbesondere vorgesehen, dass sich Bearbeitungsbereiche benachbarter Fahrspuren zumindest teilweise überlappen, so dass zur vollständigen Bearbeitung eines Flächenbereiches dieser mehrmals, vorzugsweise zweimal bearbeitet werden muss.

Es wird zudem ein Landwirtschaftliches Datenverarbeitungssystem, insbesondere Terminal oder Jobrechner, zur Durchführung zumindest eines der Verfahren nach Anspruch 1 bis 10 angepasst offenbart.

Weitere Einzelheiten der Erfindung sind der Beispielsbeschreibung zu entnehmen. Die Zeichnungen zeigen
- Fig. 1: Teilbreitenverteilung für einen Streufächer wie aus dem Stand der Technik bekannt,
- Fig. 2: Erfindungsgemäße Teilbreitenanordnung und
- Fig. 3: Aufzeichnung einer bearbeiteten Fläche bei der Fahrt im Randbereich einer landwirtschaftlichen Fläche.

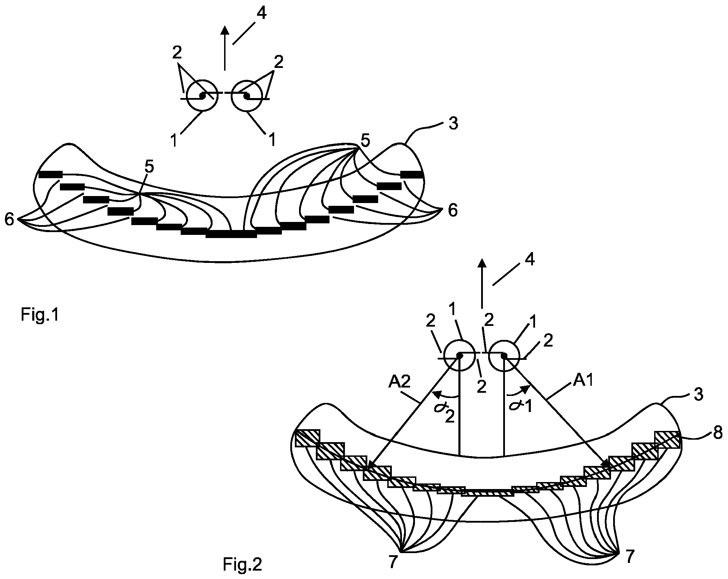

Eine aus dem Stand der Technik bekannte Anordnung von Teilbreiten ist in der Fig. 1 gezeigt. Dargestellt sind in schematischer Darstellung die Streuscheiben 1 mit den Schaufeln 2 als Teil eines an sich bekannten Schleuderstreuers. Der Streufächer 3 ist als Kontur dargestellt und wird in Fahrtrichtung 4 über das Feld bewegt. Die Anordnung der Teilbreiten 5 folgt im Wesentlichen der Geometrie des Streufächers 3. Die Form der Teilbreiten ist hierbei im Stand der Technik nicht abhängig von ihrer Position innerhalb der Teilbreite und eine Überlappung der Teilbreiten ist nicht vorgesehen.

Die Bearbeitung einer landwirtschaftlichen Fläche erfolgt nun durch Steuerung der Ausbringung mittels eines nicht dargestellten Datenverarbeitungssystems, insbesondere eines Terminals oder Jobrechners, in an sich bekannter Weise. Auf dem Jobrechner oder Terminal ist typischerweise eine Applikationskarte der zu bearbeitenden Fläche hinterlegt, welche für jeden Punkt oder zumindest einen festgelegten Bereich der zu bearbeitenden Fläche die dort auszubringende Menge an Streugut angibt. Bei der Fahrt über die Fläche wird nun durch das Terminal oder den Jobrechner ermittelt, ob am aktuellen Ort der jeweiligen Teilbreite 5 Streugut ausgebracht werden soll oder nicht. Gegebenenfalls kann dies auch vorausschauend erfolgen. Der Streufächer 3 wird dann durch das Terminal oder den Jobrechner durch Anpassung der Einstellparameter des Streuers, wie Drehzahl der Streuscheiben und Anpassung der Position des Aufgabepunktes auf die Streuscheibe in der Weise angepasst, dass nur an den Orten der Teilbreiten 5 Streugut ausgebracht wird, welche sich an einer Position der landwirtschaftlichen Fläche befinden, die zur Beaufschlagung mit Streugut in der Applikationskarte markiert sind. Die anderen Teilbreiten, welche sich an Positionen befinden, die nicht mit Streugut beaufschlagt werden sollen, werden gewissermaßen abgeschaltet und der Streufächer entsprechend derart angepasst, dass sich eine Streucharakteristik ergibt, die nur die Bereiche mit Streugut beaufschlagt, die entsprechend der Applikationskarte auch tatsächlich bestreut werden sollen. Das Terminal bzw. der Jobrechner ist zu diesem Zweck mit einem Positionserfassungssystem verbunden, um die derzeitige Position jeder Teilbreite 5 auf der landwirtschaftlichen Fläche ermitteln zu können.

Die Position und Form des aktuellen Streufächers 3 mit den Teilbreiten 5 wird durch das Terminal und/oder den Jobrechner aus den Streuparametern und/oder Messparametern ermittelt. Dies können zum einen die Drehzahl der jeweiligen Schleuderscheibe, der Aufgabepunkt des Düngers auf die Schleuderscheibe, die Art des auszubringenden Streugutes, die Art der Schleuderscheibe 1 bzw. - schaufel 2 und weitere Parameter der Verteilung sein. Auch können Sensoren an dem Streuer, vorzugsweise an oder in der Nähe der Schleuderscheiben 1 angebracht sein, welche die Verteilung überwachen. Bei diesen Sensoren kann es sich insbesondere um nicht dargestellte Radarsensoren handeln, welche in an sich bekannter Weise die tatsächliche Wurfweite und/oder den mittleren Abwurfwinkel ermitteln. Der aus diesen Daten durch den Jobrechner ermittelte Streufächer 3 sowie die Teilbreiten 5 besitzen hierbei bei der Fahrt über das Feld eine festgelegte Orientierung relativ zu den Schleuderscheiben 1, wobei sich die Position und Geometrie des Streufächers 3 und der Teilbreiten 5 bei veränderten Streubedingungen ebenfalls ändern kann. Beispielsweise ändern sich die Form des Streufächers und auch der Abstand zu den Streuscheiben bei geänderter Drehzahl. Derartige Zusammenhänge sind in dem Jobrechner oder Terminal als Rechenvorschriften hinterlegt, so dass die Geometrie und Position der Teilbreiten 5 und des Streufächers 3 laufend angepasst werden kann. Beim Schalten von Teilbreiten wird die geänderte Geometrie bei den Teilbreiten in der Form berücksichtigt, dass die entsprechenden Teilbreiten ausgeschaltet sind und dadurch die veränderte Geometrie des Streufächers wiederspiegeln. So muss nicht bei jeder Änderung des Streufächers durch geschaltete Teilbreiten die Teilbreitengeometrie neu berechnet werden. Hier wird dann für die Teilbreiten weiterhin die Grundgeometrie des Streufächers als Rechengrundlage genommen. Es wird also unterschieden, ob grundsätzlich eine neue Verteilcharakteristik eingestellt wird, insbesondere beim Beginn der Feldarbeit, oder ob sich die Form des Streufächers 3 lediglich bedingt durch das Abschalten einzelner Teilbreiten 5 ändert. In letzterem Fall wird die Position der Teilbreiten natürlich nicht neu ermittelt, da hier eine gewollte Diskrepanz zwischen der Position der Teilbreiten und der Streufächergeometrie vorliegt. Die abgeschalteten Teilbreiten sollen ja gerade nicht mit Streugut beaufschlagt werden.

Die bearbeitete Fläche wird typischerweise durch das Terminal und/oder den Jobrechner werden, indem die Flächenstücke erfasst werden, die von Teilbreiten überstrichen werden, in welche Streugut ausgebracht wird. Es werden also nur die Flächenteile als bearbeitet markiert, die von aktiven Teilbreiten überstrichen werden, während die von den abgeschalteten Teilbreiten überstrichene Fläche unberücksichtigt bleibt.

Eine Anordnungen von Teilbreiten, wie in Fig. 1 dargestellt und aus dem Stand der Technik bekannt führt insbesondere im äußeren Bereich des Streufächers zu Lücken 6 zwischen den einzelnen Teilbreiten, die sich insbesondere in Fahrtrichtung 4 erstrecken. Eine Aufzeichnung der bearbeiteten Fläche durch das Terminal und/oder den Jobrechner kann nun bei derartig angeordneten Teilbreiten dazu führen, dass Bereiche als unbearbeitet markiert werden, obwohl diese durch den Streufächer bearbeitet wurden. Insbesondere in Kurvenfahrten, wenn der Streufächer begünstigt durch einen mitunter beträchtlichen Abstand zwischen Streufächer 3 und Streuscheiben 1 eine signifikante Seitwärtsbewegung vollführt, kann es vorkommen, dass bearbeitete Flächen bei der Aufzeichnung der bearbeiteten Fläche nicht durch aktive Teilbreiten überstrichen und somit bearbeitete Flächenteile als unbearbeitet markiert werden bzw. bleiben. Dieser Effekt tritt ebenfalls auf und kann allenfalls abgeschwächt werden, wenn die Teilbreiten quer zur Fahrtrichtung eine Überlappung aufweisen, wenn nicht zusätzlich eine Überlappung in Fahrtrichtung vorgesehen ist.

Dies ist nun bei einer erfindungsgemäßen Anordnung der Teilbreiten wie in Fig. 2 dargestellt vorgesehen. Dargestellt sind ebenfalls Schleuderscheiben 1 mit Schaufeln 2. Die Schleuderscheiben sind Teil eines nicht dargestellten Streuers, der sich beispielsweise angehängt an eine landwirtschaftliche Zugmaschine in Fahrtrichtung 4 über ein Feld bewegt. Die angepassten Teilbreiten 7 werden in erfindungsgemäßer Weise durch ein Terminal und/oder einen Jobrechner derart ermittelt, dass die Form und/oder Ausdehnung jeder Teilbreite in Fahrtrichtung in der Weise in Abhängigkeit des Versatzes der Teilbreiten in Fahrtrichtung gewählt wird, dass sich zwei senkrecht zur Fahrtrichtung benachbarte Teilbreiten zumindest teilweise insbesondere in Fahrtrichtung überlappen. Im vorliegenden Beispiel werden der Abstand A1, A2 zwischen der jeweiligen Streuscheibe und dem Median 8 des Streufächers ermittelt, welcher die tatsächliche Wurfweite des Düngers angibt. Ebenfalls wird der mittlere Abwurfwinkel **α1, α2** zur Fahrtrichtung 4 für jede Streuscheibe ermittelt. Diese Werte können beispielsweise aus den Einstellparametern des Schleuderstreuers durch das Terminal und/oder den Jobrechner theoretisch berechnet oder auch mittels am Schleuderstreuer angeordneter Messsysteme, insbesondere Radarsensoren, in an sich bekannter Weise gemessen werden.

Der Jobrechner und/oder das Terminal ordnet nun die Teilbreiten 7 innerhalb des Streufächers derart an, dass die Arbeitsbreite der Verteilmaschine durch die Teilbreiten zumindest annähernd vollständig abgedeckt ist, es also quer zur Fahrtrichtung keine Lücken zwischen den Teilbreiten gibt. Die Anordnung der Teilbreiten 7 ist hierbei an die Form des Streufächers angelehnt. Insbesondere kann vorgesehen sein, dass jede Teilbreite 7 den Median 8 berührt und sich somit im in Fahrtrichtung gesehen mittleren Bereich des Streufächers befindet. Es kann zudem vorgesehen sein, dass sich keine Teilbreite 8 in Bereiche des Streufächers erstreckt, welche durch bestimmte Anteile von 100%- Düngerverteilung ausgezeichnet sind. Beispielsweise kann vorgesehen sein, dass keine der ermittelten Teilbreiten sich in einen Bereich größer 65%-Ausbringmenge, vorzugsweise größer 55%-Ausbringmenge, und kleiner 35%-Ausbringmenge, vorzugsweise kleiner 45%-Ausbringmenge, erstreckt. In erfindungsgemäßer Weise ist nun vorgesehen, dass sich die Teilbreiten mit benachbarten Teilbreiten auch tatsächlich überlappen. Hierfür ist insbesondere vorgesehen, dass es eine Überlappung in Fahrtrichtung gibt, so dass keinerlei Lücken zwischen den Teilbreiten 8 auftreten. Somit kann es vor allem bei Kurvenfahrten nicht vorkommen, dass zwischen zwei aktivierten Teilbreiten Lücken verbleiben und die Teilbreiten derart über das Feld bewegt werden, dass bearbeitete Bereich als unbearbeitet markiert bleiben. Zu diesem Zweck besitzen die Teilbreiten im Randbereich des Streufächers 3 in Fahrtrichtung eine größere Ausdehnung, da auf Grund der Geometrie des Streufächers 3 auch der Versatz benachbarter Teilbreiten in Fahrtrichtung im Randbereich größer ist. Auch bei großen Abständen A1, A2 zwischen Streuscheibe 1 und Streufächer 3 kann es so bei Kurvenfahrten nicht dazu kommen, dass bearbeitete Bereiche nicht durch Teilbreiten überstrichen werden. Ansonsten kann vorgesehen sein, dass unter Beibehaltung einer Überlappung die Ausdehnung der Teilbreiten 7 in Fahrtrichtung minimiert wird, so dass möglichst exakte Ein- und Ausschaltpunkte definierbar sind. Weitere Kriterien, wie die Ausbringmenge, die Form des Streufächers, die Geschwindigkeit der Verteilmaschine und sonstige Parameter können bei der Ermittlung der Ausdehnung jeder Teilbreite in Fahrtrichtung unter Beibehaltung einer Überlappung benachbarter Teilbreiten durch das Terminal und/oder den Jobrechner berücksichtigt werden.

Die dargestellte Geometrie des Streufächers und der Teilbreiten ist lediglich beispielhaft zu sehen. Die Abstände zwischen den Streuscheiben 1 und dem Streufächer 3 sowie die Geometrie des Streufächers sind zudem nicht maßstabsgetreu. Sowohl die Geometrie als auch die Position des Streufächers relativ zu den Streuscheiben 1 kann mit geänderten Einstellparametern teils erheblich variieren, so dass ggf. auch die Ausdehnung der Teilbreiten 7 in Fahrtrichtung zur Aufrechterhaltung einer Überlappung angepasst werden muss. Die Ausdehnung in Fahrtrichtung kann sich hierbei zur Aufrechterhaltung einer Überlappung auch nur teilweise auf die Geometrie der jeweiligen Teilbreite, beispielsweise bei dreieckigen oder L-förmigen Teilbreiten, beziehen.

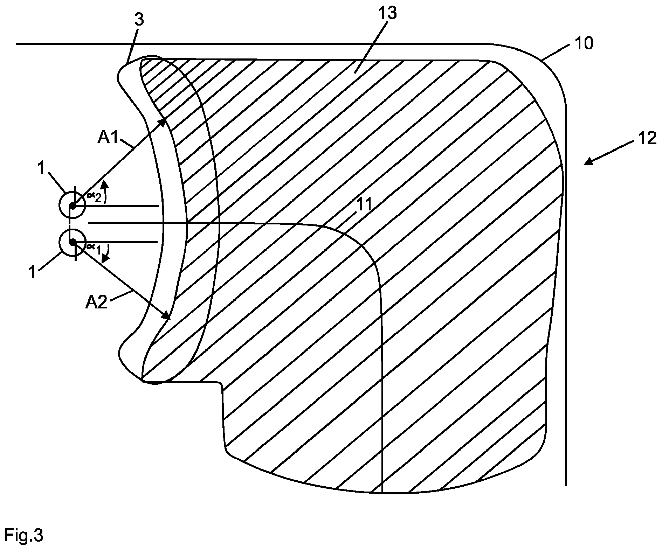

Eine Aufzeichnung einer bearbeiteten Fläche durch ein Terminal und/oder Jobrechner ist schematisch in Fig. 3 dargestellt. Ein Teil einer Begrenzung einer landwirtschaftlichen Fläche 10 sowie einer Fahrspur 11 ist dargestellt. Die Fahrspur 11 wird mit einem Schleuderstreuer derart befahren, dass die landwirtschaftliche Fläche 10 im Randbereich bearbeitet wird. Bei der Fahrt im Kurvenbereich der Fahrspur 11 schwenkt der Streufächer 3 aufgrund des Abstandes zu den Schleuderscheiben aus, so dass im Bereich 12 auch der bearbeitete Bereich seitlich ausschwenkt. Da vor allem derartige Verläufen mit einer erheblichen Seitwärtsbewegung des Streufächers und damit der Teilbreiten einhergehen, führen Anordnungen von Teilbreiten wie in Fig. 1 dargestellt in der Regel dazu, dass bei der Aufzeichnung des bearbeiteten Bereichs fälschlicherweise unbearbeitete Bereiche verbleiben, welche jedoch vom Streufächer überstrichen wurden. Derartiges ist mit sich überlappenden Teilbreitenanordnungen, wie in Fig. 2 dargestellt, nicht möglich. Entsprechend ist der in Fig. 3 aufgezeichnete, bearbeitete Bereich insbesondere auch im Kurvenbereich als geschlossene Fläche 13 markiert.

Die vorliegende Erfindung kann ebenfalls in vorteilhafter Weise verwendet werden, wenn ein Bereich nur virtuell bearbeitet wird. Beispielsweise kann vorgesehen sein, dass zur Erfassung der Geometrie einer landwirtschaftlichen Fläche die Feldgrenze, wie in Fig. 3 für einen Teil einer landwirtschaftlichen Fläche dargestellt, abgefahren wird. Hierbei kann es vorgesehen sein, dass die mit den Teilbreiten überstrichene Fläche zwar aufgezeichnet, aber nicht tatsächlich bearbeitet wird, da die Aufzeichnung nur dazu dient die äußere Kontur der landwirtschaftlichen Fläche zu erfassen. Auch hierbei kann es dazu kommen, dass bei einer Teilbreitenanordnung wie in Fig. 1 dargestellt, auf Grund der Lücken zwischen den Teilbreiten nach dem Abfahren des Außenbereichs der landwirtschaftlichen Fläche nach dem Umrunden keine geschlossene Kontur vorliegt. Auch dieses Problem kann mit der vorliegenden Erfindung in einfacher Weise behoben werden.

## Patentansprüche

1. Verfahren zur Ermittlung von Teilbreitenpositionen innerhalb des Streufächers (3) eines Schleuderstreuers ausgeführt von einem landwirtschaftlichen Datenverarbeitungssystem, wobei der Streufächer des Schleuderstreuers in Abhängigkeit der verwendeten Streuparameter, insbesondere Typ der Schleuderscheibe (1), Drehzahl der Schleuderscheibe, Aufgabepunkt des Streugutes auf die Schleuderscheibe und vorzugsweise Art des Streugutes bestimmt wird, wobei mehrere senkrecht zur Fahrtrichtung zumindest überwiegend nebeneinander angeordnete Teilbreiten (7) die Breite des Streufächers (3) zumindest annähernd vollständig abdecken, wobei die Teilbreiten (7) in Fahrtrichtung (4) in Abhängigkeit der Form des Streufächers (3) versetzt angeordnet sind,
**dadurch gekennzeichnet, dass**
die Form und/oder Ausdehnung jeder Teilbreite (7) in Fahrtrichtung (4) in der Weise in Abhängigkeit des Versatzes der Teilbreiten (7) in Fahrtrichtung (4) gewählt wird, dass sich zwei senkrecht zur Fahrtrichtung benachbarte Teilbreiten (7) zumindest teilweise, insbesondere in Fahrtrichtung, überlappen.

2. Verfahren nach Anspruch 1, **dadurch gekennzeichnet, dass** aus den verwendeten Streuparametern die Form des Streufächers (3) ermittelt wird, insbesondere in Abhängigkeit von zumindest einer die tatsächliche Wurfweite (A1, A2) und den Abwurfwinkel (α1, α2) charakterisierenden Größe und dass die Position jeder Teilbreite (7) in Abhängigkeit der Form des Streufächers (3) ermittelt wird.

3. Verfahren nach Anspruch 1 oder 2, **dadurch gekennzeichnet, dass** die Ausdehnung jeder Teilbreite (7) in Fahrtrichtung (4) proportional zum Versatz in Fahrtrichtung zumindest einer zu dieser Teilbreite benachbarten Teilbreite gewählt wird.

4. Verfahren nach zumindest einem der vorhergehenden Ansprüche, **dadurch gekennzeichnet, dass** unter Beibehaltung einer zumindest teilweisen Überlappung benachbarter Teilbreiten (7) die Ausdehnung der Teilbreiten in Fahrtrichtung (4) zur Ermittlung möglichst exakter Ein- und Ausschaltpunkte der Verteilung minimiert wird.

5. Verfahren nach zumindest einem der vorhergehenden Ansprüche, **dadurch gekennzeichnet, dass** die Form des Streufächers (3) durch die Angabe eines Quantils, insbesondere des 95%-Quantils, und/oder die Angabe des Medians (8) der Verteilung in Fahrtrichtung (4) ermittelt wird, wobei die Angabe des Medians (8) eine überwiegend quer zur Fahrtrichtung verlaufende Linie definiert, welche bei einer Bewegung der Verteilmaschine in Fahrtrichtung und gleichbleibender Ausbringparameter an der jeweiligen Position 50%-Ausbringmenge anzeigt.

6. Verfahren nach Anspruch 5, **dadurch gekennzeichnet, dass** jede der ermittelten Teilbreiten (7) an zumindest einer Position den Median (8) berührt oder schneidet.

7. Verfahren nach Anspruch 5 oder 6, **dadurch gekennzeichnet, dass** sich die ermittelten Teilbreiten (7) in einen Bereich größer oder gleich 35%-Ausbringmenge, vorzugsweise größer oder gleich 45%-Ausbringmenge, und kleiner oder gleich 65%-Ausbringmenge, vorzugsweise kleiner oder gleich 55%-Ausbringmenge, erstrecken.

8. Verfahren nach zumindest einem der Ansprüche 5 bis 7, **dadurch gekennzeichnet, dass** keine der ermittelten Teilbreiten (7) sich in einen Bereich erstreckt, welcher durch zumindest einen vorgegebenen Prozentwert und/oder Prozentbereich definiert ist, so dass der vorgegebene Prozentwert und/oder Prozentbereich nicht überschritten und/oder unterschritten wird, wobei der vorgegebene Prozentwert und/oder Prozentbereich durch gesetzliche Vorgaben hinsichtlich erlaubter Abweichungen, insbesondere Überdüngung definiert ist.

9. Verfahren nach zumindest einem der vorhergehenden Ansprüche, **dadurch gekennzeichnet, dass** der Streufächer, insbesondere die Drehzahl zumindest einer Schleuderscheibe und/oder der Aufgabepunkt des Streugutes auf zumindest eine Schleuderscheibe und/oder die Position zumindest eines Dosierschiebers, anhand vorhandener Kartendaten und/oder Applikationsdaten und der Position der Teilbreiten (7) gesteuert wird.

10. Verfahren nach zumindest einem der vorhergehenden Ansprüche, **dadurch gekennzeichnet, dass** die während der Bearbeitung durch eine jeweilige Teilbreite (7) überstrichene Fläche als bearbeitete Fläche (13), insbesondere anhand hinterlegter Kartendaten der bearbeiteten Fläche, gespeichert wird.

11. Schleuderstreuer zur Durchführung des Verfahrens nach zumindest einem der Ansprüche 1 bis 10 angepasst, wobei der Schleuderstreuer über zumindest eine, vorzugsweise zwei Schleuderscheiben (1), einen Dosierschieber pro Schleuderscheibe zur Einstellung der Ausbringmenge, einen regelbaren Antrieb pro Schleuderscheibe zur Einstellung der Drehzahl, vorzugsweise eine Einrichtung zur Anpassung des Aufgabepunktes pro Schleuderscheibe, ein Positionserfassungssystem und zumindest einen Jobrechner und/oder Terminal verfügt, wobei die Position jeder Teilbreite (7) relativ zum Schleuderstreuer durch das Terminal und/oder den Jobrechner ermittelt wird, **dadurch gekennzeichnet, dass**
der Jobrechner und/oder das Terminal die Verteilung des Schleuderstreuers in Abhängigkeit der Position jeder Teilbreite (7) und in dem Jobrechner und/oder Terminal hinterlegter Kartendaten und/oder Applikationskarten steuert.

12. Landwirtschaftliches Datenverarbeitungssystem, insbesondere Terminal oder Jobrechner, umfassend Mittel zur Durchführung zumindest eines der Verfahren nach Anspruch 1 bis 10.

## Claims

1. Method for detecting partial width positions within the spreading fan (3) of a centrifugal spreader, implemented by an agricultural data processing system, wherein the spreading fan of the centrifugal spreader is determined in accordance with the spreading parameters used, in particular the type of the centrifugal disc (1), rotational speed of the centrifugal disc, application point of the spreading material onto the centrifugal disc and preferably the type of the spreading material, wherein a plurality of partial widths (7), which are at least mainly arranged one next to the other perpendicularly with respect to the direction of travel, at least approximately completely cover the width of the spreading fan (3), wherein the partial widths (7) are arranged offset in the direction of travel (4) in accordance with the shape of the spreading fan (3),
**characterized in that**
the shape and/or extent of each partial width (7) in the direction of travel (4) is selected in accordance with the offset of the partial widths (7) in the direction of travel (4) in such a way that two partial widths (7) which are adjacent perpendicularly with respect to the direction of travel at least partially overlap, in particular in the direction of travel.

2. Method according to Claim 1, **characterized in that** the shape of the spreading fan (3) is determined from the spreading parameters used, in particular in accordance with at least one variable which characterizes the actual throwing width (A1, A2) and the throwing angle (α1, α2), and **in that** the position of each partial width (7) is detected in accordance with the shape of the spreading fan (3) .

3. Method according to Claim 1 or 2, **characterized in that** the extent of each partial width (7) in the direction of travel (4) is selected in proportion with the offset in the direction of travel of at least one partial width which is adjacent to this partial width.

4. Method according to at least one of the preceding claims, **characterized in that** the extent of the partial widths in the direction of travel (4) is minimized to detect as precisely as possible switch-on and switch-off points of the distribution, while taking into account at least partial overlapping of adjacent partial widths (7) .

5. Method according to at least one of the preceding claims, **characterized in that** the shape of the spreading fan (3) is detected by means of the specification of a quantile, in particular of the 95% quantile, and/or the specification of the median (8) of the distribution in the direction of travel (4), wherein the specification of the median (8) defines a line which runs predominantly transversely with respect to the direction of travel and which indicates a 50% discharge quantity in the case of a movement of the distribution machine in the direction of travel and the constant discharge parameters at the respective position.

6. Method according to Claim 5, **characterized in that** each of the detected partial widths (7) is in contact with or intersects the median (8) at at least one position.

7. Method according to Claim 5 or 6, **characterized in that** the detected partial widths (7) extend into a region greater than or equal to 35% of the discharge quantity, preferably greater than or equal to 45% of the discharge quantity and less than or equal to 65% of the discharge quantity, preferably less than or equal to 55% of the discharge quantity.

8. Method according to at least one of Claims 5 to 7, **characterized in that** none of the detected partial widths (7) extends into a region which is defined by at least one predefined percentage value and/or percentage range, so that the predefined percentage value and/or percentage range is not exceeded and/or undershot, wherein the predefined percentage value and/or percentage range is defined by legal specifications regarding permitted deviations, in particular overfertilization.

9. Method according to at least one of the preceding claims, **characterized in that** the spreading fan, in particular the rotational speed of at least one centrifugal disc and/or the application point of the spreading material onto at least one centrifugal disc and/or the position of at least one metering slider, is controlled on the basis of existing map data and/or application data and the position of the partial widths (7).

10. Method according to at least one of the preceding claims, **characterized in that** the area which is past over by a respective partial width (7) during the processing is stored as a processed area (13), in particular on the basis of stored map data of the processed area.

11. Centrifugal spreader adapted for carrying out the method according to at least one of Claims 1 to 10, wherein the centrifugal spreader has at least one centrifugal disc (1), preferably two centrifugal discs (1), a metering slider per centrifugal disc for setting the discharge quantity, a controllable drive per centrifugal disc for setting the rotational speed, preferably an apparatus for adapting the application point per centrifugal disc, a position-sensing system and at least one job computer and/or terminal, wherein the position of each partial width (7) relative to the centrifugal spreader is detected by means of the terminal and/or the job computer, **characterized in that**
the job computer and/or the terminal control/controls the distribution of the centrifugal spreader in accordance with the position of each partial width (7) and map data and/or application maps stored in the job computer and/or terminal.

12. Agricultural data processing system, in particular terminal or job computer, comprising means for carrying out at least one of the methods according to Claim 1 to 10.

## Revendications

1. Procédé de détermination de positions de tronçons dans l'éventail d'épandage (3) d'un épandeur centrifuge, mis en oeuvre par un système de traitement de données agricole,
dans lequel l'éventail d'épandage de l'épandeur centrifuge est déterminé en fonction des paramètres d'épandage utilisés, notamment du type de disque centrifuge (1), de la vitesse de rotation du disque centrifuge, du point d'application du produit à épandre sur le disque centrifuge et de préférence du type de produit à épandre, dans lequel plusieurs tronçons (7) disposés, au moins pour la plupart, côte à côte perpendiculairement à la direction de déplacement couvrent au moins approximativement la totalité de la largeur de l'éventail d'épandage (3), dans lequel les tronçons (7) sont disposés de manière décalée dans la direction de déplacement (4) en fonction de la forme de l'éventail d'épandage (3),
**caractérisé en ce que** la forme et/ou l'étendue de chaque tronçon (7) dans la direction de déplacement (4) est sélectionnée en fonction du décalage des tronçons (7) dans la direction de déplacement (4) de manière à ce que deux tronçons (7) adjacents perpendiculairement à la direction de déplacement se recouvrent au moins partiellement, notamment dans la direction de déplacement.

2. Procédé selon la revendication 1, **caractérisé en ce que** la forme de l'éventail d'épandage (3) est déterminée à partir des paramètres d'épandage utilisés, notamment en fonction d'au moins une grandeur caractérisant la distance de projection réelle (A1, A2) et l'angle de projection (α1, α2) et **en ce que** la position de chaque tronçon (7) est déterminée en fonction de la forme de l'éventail d'épandage (3).

3. Procédé selon la revendication 1 ou 2, **caractérisé en ce que** l'étendue de chaque tronçon (7) dans la direction de déplacement (4) est sélectionnée proportionnellement au décalage dans la direction de déplacement d'au moins un tronçon adjacent audit tronçon.

4. Procédé selon au moins l'une des revendications précédentes, **caractérisé en ce que**, tout en maintenant un chevauchement au moins partiel de tronçons adjacents (7), l'étendue des tronçons dans la direction de déplacement (4) est minimisée afin de déterminer le plus exactement possible les points d'activation et de désactivation de la distribution.

5. Procédé selon au moins l'une des revendications précédentes, **caractérisé en ce que** la forme de l'éventail d'épandage (3) est déterminée par spécification d'un quantile, notamment du quantile de 95 % et/ou par spécification de la médiane (8) de la distribution dans la direction de déplacement (4), dans lequel la spécification de la médiane (8) définit une ligne qui s'étend principalement transversalement à la direction de déplacement et qui, lorsque la machine de distribution se déplace dans la direction de déplacement et que les paramètres d'éjection restent constants, indique une quantité éjectée de 50 % à la position respective.

6. Procédé selon la revendication 5, **caractérisé en ce que** chacun des tronçons déterminés (7) est en contact avec la médiane (8) ou la coupe en au moins une position.

7. Procédé selon la revendication 5 ou 6, **caractérisé en ce que** les tronçons déterminés (7) s'étendent dans une plage supérieure ou égale à une quantité éjectée de 35 %, de préférence supérieure ou égale à une quantité éjectée de 45 % et inférieure ou égale à une quantité éjectée de 65 %, et de préférence inférieure ou égale à une quantité éjectée de 55 %.

8. Procédé selon au moins l'une des revendications 5 à 7, **caractérisé en ce qu'**aucun des tronçons (7) déterminés ne s'étend dans une plage qui est définie par au moins une valeur de pourcentage et/ou une plage de pourcentage prédéterminée, de manière à ce que la valeur de pourcentage et/ou la plage de pourcentage prédéterminée ne soit dépassée ni en sens croissant ni en sens décroissant, dans lequel la valeur de pourcentage et/ou la plage de pourcentage prédéterminée est définie par des réglementations légales en ce qui concerne les écarts autorisés, notamment la surfertilisation.

9. Procédé selon au moins l'une des revendications précédentes, **caractérisé en ce que** l'éventail d'épandage, notamment la vitesse de rotation d'au moins un disque centrifuge et/ou le point d'application du produit à épandre sur au moins un disque centrifuge et/ou la position d'au moins un chariot doseur, est commandé sur la base de données cartographiques et/ou de données d'application existantes et de la position des tronçons (7).

10. Procédé selon au moins l'une des revendications précédentes, **caractérisé en ce que** la surface parcourue par un tronçon (7) respectif pendant le traitement est stockée en tant que surface traitée (13), notamment sur la base de données cartographiques enregistrées de la surface traitée.

11. Épandeur centrifuge conçu pour mettre en oeuvre le procédé selon au moins l'une des revendications 1 à 10, dans lequel l'épandeur centrifuge comporte au moins un, de préférence deux, disques centrifuges (1), un chariot doseur par disque centrifuge pour le réglage de la quantité éjectée, un dispositif d'entraînement réglable par disque centrifuge pour le réglage de la vitesse de rotation, de préférence un dispositif pour l'ajustement du point d'application par disque centrifuge, un système de détection de position et au moins un calculateur de tâches et/ou un terminal, dans lequel la position de chaque tronçon (7) par rapport à l'épandeur centrifuge est déterminée par le terminal et/ou le calculateur de tâches,
**caractérisé en ce que** le calculateur de tâches et/ou le terminal commande la distribution de l'épandeur centrifuge en fonction de la position de chaque tronçon (7) et de données cartographiques et/ou de cartes d'application enregistrées dans le calculateur de tâches et/ou le terminal.

12. Système de traitement de données agricole, notamment terminal ou calculateur de tâches, comportant des moyens destinés à mettre en oeuvre au moins l'un des procédés selon les revendications 1 à 10.
